# FASCICULE DE BREVET EUROPEEN

(11) **EP 2 303 678 B1**
(45) Date de publication et mention de la délivrance du brevet: **09.05.2012**
(21) Numéro de dépôt: 09784439.3
(22) Date de dépôt: 26.06.2009
(51) Int. Cl.: B63B 9/00, B62D 57/024, G01N 29/265

(54) **SYSTEME ET PROCEDE D'INSPECTION DE LA COQUE D'UN NAVIRE**
SYSTEM UND VERFAHREN ZUR UNTERSUCHUNG DES RUMPFES EINER SEEFAHRZEUGES
SYSTEM AND METHOD FOR THE INSPECTION OF THE HULL OF A MARITIME VESSEL

(30) Priorité: 30.06.2008 FR 0854396
(43) Date de publication de la demande: 06.04.2011
(73) Titulaire: DCNS, 75015 Paris (FR)
(72) Inventeur: MYX, Olivier, F-83200 Toulon (FR)
(74) Mandataire: Jacobson, Claude
(86) Numéro de dépôt international: PCT/FR2009/051230
(87) Numéro de publication internationale: WO 2010/004181

(56) Documents cités:
- WO-A-2006/114485
- US-A- 5 947 051
- US-A1- 2007 029 125

## Description

L'invention concerne un système d'inspection de la coque d'un navire du type comportant un engin mobile apte à se déplacer sur la surface de la coque du navire. Plus particulièrement, l'invention est relative à un moyen de positionnement permettant d'obtenir une position instantanée de l'engin par rapport à un repère de référence.

On connaît des systèmes d'inspection comportant un engin robotisé commandé à distance, apte à se déplacer sur la coque d'un navire. Pour cela, l'engin mobile est équipé d'un moyen de déplacement comportant un moyen d'adhérence permettant à l'engin de rester en contact de la coque, et un moyen d'entraînement pour déplacer l'engin sur la surface de la coque du navire. L'engin embarque également différents types de capteur pour réaliser des mesures locales de grandeurs physiques caractéristiques de la coque. L'engin comporte également un moyen de positionnement permettant d'obtenir une position instantanée de l'engin par rapport à un repère de référence, de préférence lié à la coque du navire. L'association d'une mesure d'une grandeur physique et de la position de l'engin au moment où cette mesure a été effectuée permet de réaliser une cartographie de la coque en déplaçant l'engin le long d'une trajectoire adaptée.

Jusqu'à présent, comme cela est par exemple décrit dans le document FR 2 861 457, le moyen de positionnement est un moyen de positionnement sous l'eau ou un moyen de positionnement dans l'air. En conséquence le système d'inspection est utilisé sur la partie immergée de la coque d'un navire, c'est-à-dire sous la ligne de flottaison du navire, ou sur la partie émergée, c'est-à-dire au-dessus de la ligne de flottaison.

Un moyen de positionnement sous l'eau connu, par exemple du document US 5-945-051, comporte un émetteur acoustique, disposé sur l'engin mobile, et deux récepteurs acoustiques, immergés et fixés respectivement à deux bouées flottant à la surface de l'eau. Les bouées, distantes l'une de l'autre, sont positionnées de manière absolue par un système du type GPS. L'émetteur génère un signal acoustique périodique, et la corrélation temporelle des signaux reçus, au niveau des bouées, par chacun des récepteurs permet, par triangulation, de bouées. Un tel moyen de positionnement sous l'eau offre une précision maximale de l'ordre de 50 cm.

La mise en oeuvre d'un tel moyen de positionnement sous l'eau requière un champ libre sur le côté du navire afin de disposer les bouées à distance de la coque pour atteindre la précision maximale. Cela empêche de mettre en oeuvre le système d'inspection sur le côté de la coque tournée vers le quai. Il faut alors déplacer le navire, pour lui faire effectuer un demi tour, de manière à libérer le côté de la coque initialement proche du quai lorsqu'on souhaite inspecter.

Un moyen connu de positionnement dans l'air met en oeuvre un système de positionnement du type DGPS, entre des balises au sol et une antenne placée sur l'engin mobile. La précision maximale d'un tel moyen de positionnement dans l'air est de l'ordre de 50 cm.

Un autre moyen connu de positionnement dans l'air consiste en un appareil optique comportant une station de référence fixe au sol et un émetteur optique fixé sur le robot. La station de référence pointe automatiquement sur l'émetteur et en délivre la position tridimensionnelle avec une précision centimétrique.

Les deux premiers moyens de positionnement précité n'offrent pas la précision requise pour effectuer une inspection de la coque d'un navire de manière efficace. En effet, il faut éviter qu'à cause du manque de précision des mesures de position de l'engin, un même défaut de la coque soit cartographié plusieurs fois comme ayant des positions différentes. Cela conduirait sinon à la surestimation de la gravité de ce défaut et à la mise en oeuvre d'opérations de maintenance de la coque importantes nécessitant éventuellement l'immobilisation du navire. Inversement, il faut éviter qu'un défaut ayant une extension importante soit minimisé à cause du manque de précision du moyen de positionnement. Ainsi, la précision souhaitable sur le positionnement d'un tel système d'inspection est de l'ordre de 10 cm.

De plus, il est souhaitable de pouvoir inspecter la coque du navire sur la totalité de sa surface, c'est-à-dire aussi bien au-dessous, qu'au-dessus de la ligne de flottaison, par la mise en oeuvre d'un unique engin. Pour cela il est nécessaire de disposer d'un système de positionnement opérationnel aussi bien dans l'air que dans l'eau. Il est également souhaitable qu'un tel système de positionnement permette de positionner l'engin avec la même précision aussi bien au-dessous, qu'au-dessus de la ligne de flottaison.

Pour effectuer des mesures instantanées de la position de l'engin aussi bien dans l'air que dans l'eau, et avec la même précision, une solution possible est d'équiper l'engin d'une centrale inertielle. L'intégration des mouvements de l'engin au cours de son déplacement à partir d'un point de référence permet de déterminer la position instantanée de l'engin. Mais, pour la précision recherchée, le coût d'une centrale inertielle adaptée est élevé. De plus, le volume et la masse importants d'une centrale inertielle sont incompatibles avec le fonctionnement correct de l'engin qui doit rester compact et léger pour adhérer et se déplacer sur la coque du navire.

L'invention a donc pour but de proposer un système d'inspection de la coque d'un navire équipé d'un moyen de positionnement de l'engin mobile qui permette de réaliser des mesures de position à la fois au-dessus et au-dessous de la ligne de flottaison du navire et ceci avec une précision constante et élevée, tout en ayant un coût de mise en oeuvre réduit.

Pour cela l'invention a pour objet un système d'inspection de la coque d'un navire, du type comportant un engin mobile équipé d'un moyen de déplacement lui permettant de se déplacer sur la surface de la coque du navire, le système comportant en outre un moyen de positionnement permettant de déterminer une position instantanée de l'engin par rapport à un repère de référence. Le moyen de positionnement comporte :
- des première et seconde roues codeuses équipant l'engin, coaxiales et séparées l'une de l'autre d'une distance d'entraxe le long d'un axe transversal perpendiculaire à un axe longitudinal de déplacement de l'engin, en contact avec la coque du navire, et aptes à mesurer des premier et second déplacements linéaires instantanés de l'engin ;
- des premier et second inclinomètres équipant l'engin, disposés de manière à mesurer respectivement des inclinaisons instantanées, par rapport à une direction de référence, d'un premier axe et d'un second axe d'un repère lié à l'engin ; et,
- un moyen de traitement, recevant en entrée les premier et second déplacements linéaires instantanés et les premières et secondes inclinaisons instantanées, apte à calculer une variation instantanée de position de l'engin dans le repère de référence, et apte à intégrer les variations instantanées de position successives, à partir d'une position initiale connue, pour déterminer une position instantanée de l'engin dans le repère de référence.

Suivant des modes particuliers de l'invention, le système d'inspection comporte une ou plusieurs des caractéristiques suivantes, prises isolément ou suivant toutes les combinaisons techniquement possibles :
- le système d'inspection comporte au moins un capteur pour mesurer une valeur locale d'un paramètre caractéristique de la coque du navire.
- le premier axe est parallèle à une direction longitudinale X de l'engin, et le second axe est parallèle à une direction transversale Y de l'engin, les premier et second axes étant orthogonaux à une direction normale à la surface de la coque du navire.
- la direction de référence des inclinomètres est une verticale géographique.
- l'engin est téléopéré, le système d'inspection comportant une station de contrôle distante, en communication avec l'engin.
- le moyen de traitement est embarqué à bord de l'engin.
- la station de contrôle distante comprend le moyen de traitement.
- le système est apte à prendre en compte les mesures de l'orientation instantanée du navire par rapport au repère de référence pour déterminer une position instantanée de l'engin dans un repère lié à la coque du navire.

L'invention a également pour objet un procédé d'inspection de la coque d'un navire mettant en oeuvre le système d'inspection présenté ci-dessus et comportant au moins les étapes consistant à :
- disposer l'engin contre la coque d'un navire et commander son déplacement ;
- mesurer un déplacement linéaire instantané de l'engin;
- mesurer une rotation instantanée de l'engin autour d'une direction normale Z à la surface de la coque du navire ;
- mesurer des première et seconde inclinaisons instantanées de premier et second axes liés à l'engin par rapport à une direction de référence ;
- traiter lesdites données mesurées pour calculer une variation de position instantanée de l'engin ; puis,
- intégrer lesdites variations de position instantanées à partir d'une position initiale prédéterminée, pour déterminer une position instantanée de l'engin dans un repère de référence.

Le procédé d'inspection comporte une ou plusieurs des caractéristiques suivantes, prises isolément ou suivant toutes les combinaisons techniquement possibles :
- on enregistre les mesures réalisées par des capteurs dont est muni l'engin, et on associe chaque mesure à la position à laquelle l'acquisition a été faite.
- on mesure l'orientation instantanée du navire par rapport au repère de référence pour déterminer, à partir de la variation de position instantanée de l'engin par rapport au repère de référence, la variation de position instantanée de l'engin par rapport à un repère lié à la coque du navire.

L'invention et ses avantages seront mieux compris à la lecture de la description qui va suivre, donnée uniquement à titre d'exemple et faite en se référant aux dessins annexés, dans lesquels :
- la figure 1 est une représentation schématique du système d'inspection de la coque d'un navire ; et,
- la figure 2 illustre le procédé d'inspection mettant en oeuvre le système de la figure 1.

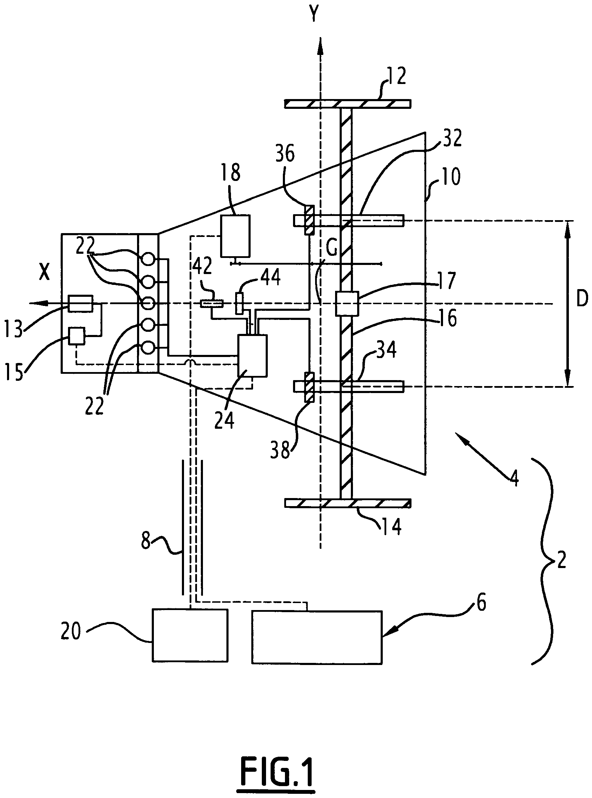

En se référant à la figure 1, le système d'inspection 2 comporte un engin robotisé 4 commandé à distance. Pour cela, le système d'inspection 2 comporte une station de contrôle 6 permettant à un opérateur de contrôler le fonctionnement de l'engin 4. La station de contrôle 6 est reliée à l'engin 4 par un moyen de liaison qui est un câble électrique circulant le long d'un ombilical 8 ou un moyen de communication radio.

L'engin 4 comporte un châssis 10 de forme générale parallélépipédique, un moyen permettant de le maintenir contre la coque d'un navire et un moyen de déplacement.

Le moyen de déplacement comporte deux roues motrices 12 et 14 montées aux extrémités d'un axe 16. Le moyen de déplacement comporte un système différentiel 17 pour permettre aux roues motrices 12 et 14 de tourner à des vitesses de rotation différentes.

Afin de situer les différents éléments constitutifs de l'engin 4 et de définir l'orientation de celui-ci dans l'espace, on associe au châssis 10 un repère orthonormé X, Y, Z ayant pour origine le centre de gravité G de l'engin 4. La direction transversale Y est parallèle à l'axe 16, la direction Z est normale à la surface de la coque, et la direction longitudinale X est perpendiculaire aux directions Y et Z.

Le moyen de déplacement comporte également une roue avant directionnelle 13. Un moyen d'actionnement 15 commandé à distance, est apte à faire tourner la roue avant directionnelle 13 sur 360°autour d'un axe parallèle à la direction Z, de manière à faire tourner le châssis 10 de l'engin 4 à mesure qu'il roule sur la coque du navire.

Le moyen de déplacement comporte, en outre, un moyen d'entraînement de l'axe 16, pour mettre en mouvement l'engin 4 selon la direction longitudinale X. Le moyen d'entraînement comporte par exemple un moteur électrique 18 alimenté en courant électrique par une batterie 20. De préférence, la batterie 20 n'est pas disposée à l'intérieur du châssis 10 mais à distance, l'énergie électrique étant fournie depuis la batterie 20 au moteur 18 à travers un câble d'alimentation circulant le long de l'ombilical 8.

Le moyen pour maintenir l'engin 4 contre la coque du navire comprend des moyens d'adhérence (non représentés) mettant en oeuvre des forces magnétiques pour plaquer l'engin 4 contre la coque du navire, tout en permettant aux roues du moyen de déplacement de rouler sur la surface de la coque.

L'engin 4 embarque différents types de capteur destinés à ausculter la coque du navire. Ces capteurs sont par exemple des capteurs ultrasonores permettant de mesurer l'épaisseur locale de la coque du navire. Sur la figure 1, ces capteurs d'épaisseur sont indiqués par la référence générale 22.

Le système d'inspection 2 comporte un moyen de traitement ayant entre autre, une unité de calcul, des moyens de mémorisation et une interface entrée/sortie. De préférence, le moyen de traitement 24 est embarqué à bord de l'engin 4, mais pourrait en variante être situé à distance, au niveau de la station de contrôle 6. Les différents capteurs, tels que les capteurs 22 équipant l'engin 4 sont connectés au moyen de traitement 24 par l'intermédiaire de l'interface entrée/sortie.

Le système d'inspection 2 comporte un moyen de positionnement apte à fonctionner, avec la même précision, dans l'air et dans l'eau.

Le moyen de positionnement comporte, sur l'engin 4, des première et seconde roues codeuses, 32 et 34, montées libres en rotation sur l'axe 16. Les roues codeuses 32 et 34 sont indépendantes des roues motrices 12 et 14 pour ne pas être sensibles au glissement des ces dernières, en particulier lors d'une rotation de l'engin 4 autour d'une direction normale Z à la surface de la coque.

Les première et seconde roues codeuses 32 et 34 sont séparées l'une de l'autre d'une distance d'entraxe prédéterminée D et sont en contact sans glissement avec la coque du navire. Des premier et second capteurs optiques, 36 et 38, sont respectivement disposés au voisinage des première et seconde roues codeuses 32 et 34 de manière à générer respectivement un signal électrique, émis en direction du moyen de traitement 24, lorsqu'un motif disposé sur la roue codeuse associée passe devant le capteur considérée. Les deux signaux électriques correspondent respectivement à des premier et second déplacements linéaires.

La moyenne des premier et second déplacements linéaires représente une translation élémentaire instantané de l'engin 4 le long de la direction longitudinale X. La différence entre les premier et second déplacements linéaires, en tenant compte de la distance d'entraxe D, représente une rotation élémentaire instantanée de l'engin 4 autour de la direction normale Z à la surface de la coque.

Le moyen de positionnement comporte également des premier et second inclinomètres 42 et 44. Le premier inclinomètre 42 est disposé de manière à mesurer l'inclinaison instantanée entre l'axe longitudinal X du châssis 10 et une direction de référence Zref qui de préférence est une verticale géographique. Le second inclinomètre 44 est disposé de manière à mesurer une inclinaison instantanée de l'axe transversal Y du châssis 10, de préférence par rapport à la même direction de référence Zref. L'homme du métier comprendra que les premier et second inclinomètres 42 et 44 peuvent être disposés autrement, tant qu'ils permettent d'obtenir deux mesures d'inclinaison instantanée de deux axes définissant un plan caractéristique.

Les premier et second inclinomètres 42 et 44 sont connectés au moyen de traitement 24 auquel ils transmettent les signaux électriques qu'ils produisent afin de déterminer l'inclinaison des axes X et Y par rapport à la direction de référence. Le moyen de traitement 24 peut, par exemple, fonctionner par échantillonnage. Dans ce cas, la différence entre la mesure d'inclinaison à un instant donné et la mesure d'inclinaison à un instant immédiatement suivant, c'est-à-dire à l'instant d'échantillonnage suivant du moyen de traitement 24, permet d'obtenir une mesure de la variation instantanée d'inclinaison d'un axe par rapport à la direction de référence.

Le déplacement élémentaire instantané selon la direction longitudinale X, la rotation élémentaire instantanée de l'engin 4 autour de la direction normale Z à la surface de la coque, ainsi que les variations instantanées d'inclinaison selon les directions longitudinale X et transversale Y permettent de calculer, entre deux instants d'échantillonnage successifs, un vecteur variation de position instantanée de l'engin par rapport à un repère de référence Xref, Yref, Zref, fixe dans l'espace.

Puisque l'on souhaite réaliser une cartographie de la coque du navire, il est nécessaire de connaître la variation de position instantanée de l'engin 4 par rapport au navire. Pour passer du repère de référence Xref, Yref, Zref à un repère lié à la coque du navire X0, Y0, Z0 II faut déterminer l'orientation instantanée du navire par rapport au repère de référence, Xref, Yref, Zref.

Dans ce but, on fixe sur le navire un ensemble 60 comportant des inclinomètres de référence et des moyens de transmission des mesures effectuées vers, par exemple, le moyen de traitement 24. Les inclinomètres de référence, solidaires de la coque, mesurent, à chaque instant, les inclinaisons de roulis et de tangage du navire par rapport au repère de référence. Ces mesures permettent au moyen de traitement 24 de déterminer l'orientation instantanée du repère lié à la coque X0, Y0, Z0 par rapport au repère de référence Xref, Yref, Zref. Puis, à partir du vecteur variation de position de l'engin 4 relativement au repère de référence, et connaissant l'orientation instantané du repère lié à la coque par rapport au repère de référence, le moyen de traitement 24 détermine un vecteur variation de position instantané de l'engin 4 par rapport au repère lié à la coque X0, Y0, Z0.

En variante, le navire est équipé d'un moyen de détermination de son orientation instantanée, tel qu'une centrale inertielle, dont les mesures sont transmises au moyen de traitement 24 pour déterminer le mouvement de l'engin par rapport à la coque du navire.

Ainsi, le procédé d'inspection peut être effectué non seulement lorsque le navire à inspecter est immobile, à quai, mais également lorsqu'il est en mouvement, par exemple en mer.

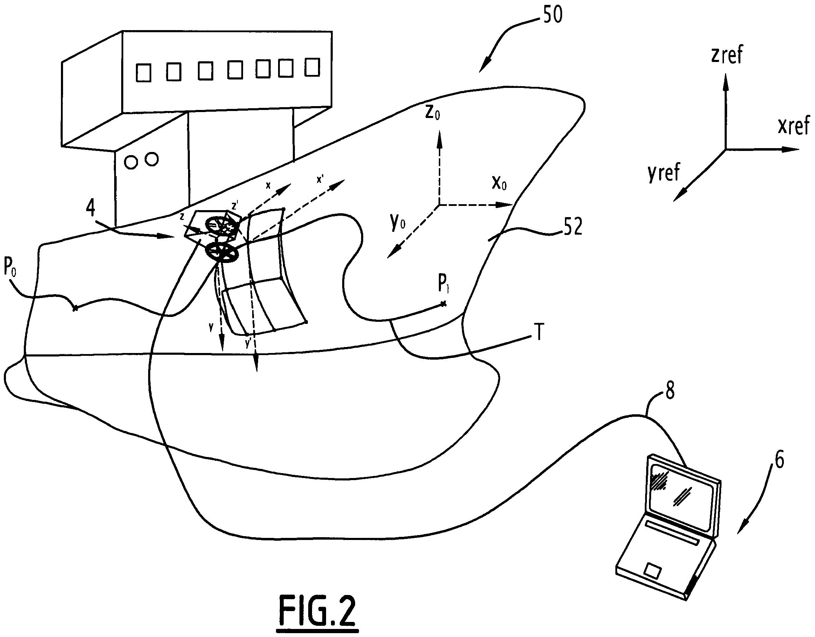

En se référant à la figure 2, on va décrire l'utilisation de l'engin 4 pour établir une carte des défauts d'épaisseur de la coque 52 d'un navire 50.

Tout d'abord, l'engin 4 est positionné en un point P0 de la coque 52. Le point P0 a une position connue dans le repère lié à la coque X0, Y0, Z0. Par exemple, le point P0 est la perpendiculaire arrière du navire 50.

Puis, le déplacement de l'engin 4 est actionné à distance par un opérateur utilisant la station 6. Entre deux instants d'échantillonnages successifs, le repère lié à l'engin 4, indiqué sur la figure 2 par les directions X, Y et Z à l'instant d'échantillonnage précédent et par les directions X', Y' et Z' à l'instant d'échantillonnage suivant, s'est déplacé. En adaptant le temps d'échantillonnage et la vitesse de déplacement en fonction de la précision souhaitée, le moyen de traitement 24 calcule, en temps réel, le vecteur variation de position instantanée de l'engin par rapport au repère de référence. En tenant compte de l'orientation instantanée du navire par rapport au repère de référence, le moyen de traitement 24 calcule, en temps réel, le vecteur variation de position instantanée de l'engin par rapport au repère lié à la coque. L'homme du métier connaît les étapes du traitement mathématique permettant de calculer, à partir des données mesurées d'inclinaison, de rotation et de translation, les vecteurs variation de position instantanée.

Puis, le moyen de traitement 24 intègre par rapport au temps le vecteur variation de position instantanée de l'engin 4 par rapport au repère lié à la coque et en considérant la position du point de départ P0, pour déterminer la position instantanée de l'engin 4 par rapport au repère lié à la coque. Ainsi, de proche en proche, on reconstruit, en trois dimensions, la trajectoire T suivie par l'engin 4 au cours de son déplacement sur la coque du navire.

En faisant suivre à l'engin 4 une succession de trajectoires T le long de la coque 52, et de préférence des trajectoires T se croisant à angle droit, on reconstruit, en trois dimensions, la surface de la coque 52.

Eventuellement, au cours du déplacement de l'engin 4, il est possible de recaler la position instantanée de l'engin 4 dans le repère lié à la coque en le faisant passer par un point P1 de la coque 52 dont la position dans le repère lié à la coque est parfaitement connue. Par exemple, l'engin 4 peut suivre une trajectoire T passant par le point intermédiaire P1 qui est la perpendiculaire avant de la coque 52.

Afin d'effectuer la cartographie des défauts de la coque, le moyen de traitement 24 enregistre à chaque échantillonnage la position de l'engin 4 et la ou les grandeurs mesurées par les capteurs 22. En variante, au lieu d'associer une position avec une grandeur, on associe, d'une part, une positon avec un instant de mesure de cette position, et, d'autre part, une grandeur avec un instant de mesure de cette grandeur. Cette méthode de datation des données utilise un signal temporel délivré par une horloge. Il s'agit par exemple du signal d'horloge délivré par un système GPS.

En variante, le traitement des données, au lieu d'être effectué par un moyen de traitement embarqué à bord de l'engin, est effectué par un moyen de traitement prévu à cet effet dans la station de contrôle distante. Le traitement peut également être fait en temps réel ou en temps différé.

L'homme du métier constatera que les moyens mis en oeuvre selon l'invention sont robustes et qu'ils fonctionnent à la fois sous l'eau et dans l'air. La précision sur la position instantanée de l'engin est de 0,05 %.

Le procédé d'inspection de la coque d'un navire qui vient d'être présenté permet de réaliser un maillage de la surface de la coque du navire inspecté qui, en fonction du temps d'échantillonnage, peut avoir un pas bien inférieur aux 50 cm généralement requis par les normes de contrôle de qualité de l'état des coques de navire.

Avantageusement, le procédé d'inspection permet de répondre aux exigences importantes requises sur la précision des cartographies qui permettent le contrôle des coques de sous-marins.

Avantageusement, puisque les cartographies de coque réalisées en effectuant le procédé d'inspection ont une grande précision, le procédé d'inspection peut être effectué après que le navire a été chargé, de manière à mesurer la jauge instantanée du navire, c'est-à-dire la totalité de la surface mouillée de la coque du navire chargé. Ceci présente un intérêt, par exemple dans le cas où le navire emprunte un canal dont la taxe de passage est calculée sur la jauge du navire. Jusqu'à présent, c'est la jauge théorique du navire qui est utilisée. Mais, en mettant en oeuvre la présente invention, la jauge instantanée pourrait être utilisée.

## Revendications

1. Système d'inspection (2) de la coque (52) d'un navire (50), du type comportant un engin mobile (4) équipé d'un moyen de déplacement lui permettant de se déplacer sur la surface de la coque du navire, le système comportant en outre un moyen de positionnement permettant de déterminer une position instantanée de l'engin par rapport à un repère de référence (Xref, Yref, Zref), **caractérisé en ce que** le moyen de positionnement comporte :
- des première et seconde roues codeuses (32, 34) équipant l'engin, coaxiales et séparées l'une de l'autre d'une distance d'entraxe (D) le long d'un axe transversal (4) perpendiculaire à un axe longitudinal (X) de déplacement de l'engin, en contact avec la coque du navire, et aptes à mesurer des premier et second déplacements linéaires instantanés de l'engin j
- des premier et second inclinomètres (42, 44) équipant l'engin, disposés de manière à mesurer respectivement des inclinaisons instantanées, par rapport à une direction de référence, d'un premier axe et d'un second axe d'un repère lié à l'engin, les premier et second axes étant orthogonaux à une direction normale à la surface de la coque du navire et définissant un plan caractéristique, le premier axe étant parallèle à une direction longitudinale (X) de l'engin (4) et le second axe étant parallèle à une direction transversale (Y) de l'engin (4) ; et,
- un moyen de traitement (24), recevant en entrée les premier et second déplacements linéaires instantanés et les premières et secondes inclinaisons instantanées, apte à calculer une variation instantanée de position de l'engin dans le repère de référence, et apte à intégrer les variations instantanées de position successives, à partir d'une position initiale connue (P0), pour déterminer une position instantanée de l'engin dans le repère de référence.

2. Système d'inspection selon la revendication 1, **caractérisé en ce qu'**il comporte au moins un capteur (22) pour mesurer une valeur locale d'un paramètre caractéristique de la coque du navire.

3. Système d'inspection selon l'une quelconque des revendications précédentes, **caractérisé en ce que** ladite direction de référence des inclinomètres (42, 44) est une verticale géographique.

4. Système d'inspection selon l'une quelconque des revendications précédentes, **caractérisé en ce que** le système d'inspection (2) comporte une station de contrôle (6) distante, en communication avec l'engin.

5. Système d'inspection selon l'une quelconque des revendications 1 à 4, **caractérisé en ce que** le moyen de traitement (24) est embarqué à bord de l'engin (4).

6. Système d'inspection selon la revendication 4, **caractérisé en ce que** la station de contrôle distante (6) comprend ledit moyen de traitement.

7. Système d'inspection selon l'une quelconque des revendications 1 à 6, **caractérisé en ce qu'**il est apte à prendre en compte les mesures de l'orientation instantanée du navire par rapport au repère de référence pour déterminer une position instantanée de l'engin dans un repère lié à la coque du navire (X0, Y0, Z0).

## Claims

1. System for inspecting (2) the hull (52) of a ship (50), of the type including a mobile machine (4) which is equipped with means for movement, enabling it to move on the surface of the hull of the ship, the system also including a means for positioning, making it possible to determine an instantaneous position of the machine relative to a reference mark (Xref, Yref, Zref),
**characterized in that** the positioning means include:
- first and second encoding wheel (32, 34) which equip the machine, are coaxial and separated from each other by a centre-to-centre distance (D) along a transverse axis (4) which is perpendicular to a longitudinal axis (X) of movement of the machine, are in contact with the hull of the ship, and are capable of measuring the first and second instantaneous linear movements of the machine;
- first and second inclinometers (42, 44) which equip the machine, and are arranged so as to measure respectively the instantaneous inclinations, relative to a reference direction, of a first axis and a second axis of a mark which is linked to the machine, the first and second axes being orthogonal to a normal direction to the surface of the hull of the ship, and defining a characteristic plane, the first axis being parallel to a longitudinal direction (X) of the machine (4) , and the second axis being parallel to a transverse direction (Y) of the machine (4); and
- a processing means (24), which receives as input the first and second instantaneous linear movements and the first and second instantaneous inclinations, is capable of calculating an instantaneous variation of the position of the machine in the reference mark, and is capable of integrating the successive instantaneous variations of position, from a know initial position (P0), to determine an instantaneous position of the machine in the reference mark.

2. Inspection system according to claim 1, **characterized in that** it includes at least one sensor (22) to measure a local value of a characteristic parameter of the hull of the ship.

3. Inspection system according to any one of the preceding claims, **characterized in that** said reference direction of the inclinometers (42, 44) is a geographical vertical.

4. Inspection system according to any one of the preceding claims, **characterized in that** the inspection system (2) includes a remote control station (6) in communication with the machine.

5. Inspection system according to any one of Claims 1 to 4, **characterized in that** the processing means (24) is on board the machine (4).

6. Inspection, system according to Claim 4, **characterized in that** the remote control station (5) includes said processing means.

7. Inspection system according to any one or Claims 1 to 6, **characterized in that** it is capable of taking account of the measurements of the instantaneous orientation of the ship relative to the reference mark, to determine an instantaneous position of the machine in a mark linked to the hull of the ship (X0, Y0, Z0),

## Patentansprüche

1. Inspektionssystem (2) für den Rumpf (52) eines Schiffes (50), des Typs, der eine mobile Maschine (4) aufweist, die mit einem Bewegungsmittel ausgestattet ist, das es ihr ermöglicht, sich an der Oberfläche des Rumpfes des Schiffes zu bewegen, wobei das System ferner ein Positionierungsmittel ausweist, das ermöglicht, eine momentane Position der Maschine bezüglich eines Referenzbezugspunktes (Xref, Yref, Zref) zu ermitteln,
**dadurch gekennzeichnet, dass** das Positionierungsmittel aufweist:
- ein erstes und ein zweitens Codierungsrad (32, 34) , mit denen die Maschine ausgestattet ist, die koaxial und in einem Achsabstand (D) entlang einer transversalen Achse (4) senkrecht zu einer longitudinalen Bewegungsachse (X) der Maschine voneinander getrennt angeordnet sind, die in Kontakt mit dem Schiffsrumpf sind und in der Lage sind, eine erste und eine zweite momentane Linearbewegung der Maschine zu messen,
- einen ersten und einen zweien Neigungsmesser (42, 44), mit denen die Maschine ausgestattet ist, die angeordnet sind, um jeweils momentane Neigungen bezüglich einer Referenzrichtung einer ersten Achse und einer zweiten Achse eines Bezugspunktes zu messen, der mit der Maschine verbunden ist, wobei die erste und die zweite Achse orthogonal zu einer zu der Oberfläche des Rumpfes des Schiffes senkrechten Richtung sind und eine Kennebene definieren, wobei die erste Achse parallel zu einer Längsrichtung (X) der Maschine (4) ist und die zweite Achse parallel zu einer Querrichtung (Y) der Maschine (4) ist, und
- ein Verarbeitungsmittel (24), das am Eingang die erste und die zweite momentane Linearbewegung und die erste und die zweite momentane Neigung empfängt, das in der Lage ist, eine momentane Verränderung der Position der Maschine in dem Referenzbezugspurkt zu berechnen, und in der Lage ist, die momentanen aufeinanderfolgenden Positionsveränderungen ausgehend von einer bekannten Anfangsposition (P0) zu integrieren, um eine momentane Position der Maschine in dem Referenzbezugspunkt zu bestimmen.

2. Inspektionssystem gemäß Anspruch 1., **dadurch gekennzeichnet, dass** es mindestens einen Fühler (22) aufweist, um einen lokalen Wert eines Kennwertes des Rumpfes des Schiffes zu messen.

3. Inspektionssystem gemäß irgendeinem der vorhergehenden Ansprüche, **dadurch gekennzeichnet, dass** die Referenzrichtung der Neigungsmesser (42, 44) eine geographische Vertikale ist.

4. Inapektionssyatem gemäß irgendeinem der vorhergehenden Absprüche, **dadurch gekennzeichnet, dass** das Inspektionssystem (2) eine Fernsteuerungsstation (6) in Kommunikation mit der Maschine aufweist.

5. Inspektionssystem gemäß irgendeinem der Ansprüche 1 bis 4, **dadurch gekennzeichnet, dass** das Verarbeitungsmittel (24) an Bord der Maschine (4) aufgenommen ist.

6. Inspektionssystem gemäß Anspruch 4, **dadurch gekennzeichnet, dass** die Fernsteuerungsstation (6) das Verarbeitungsmittel aufweist.

7. Inspektionssystem gemäß irgendeinem der Ansprüche 1 bis 6, dadurch gekenntzeichnet, dass es in der Lage ist, die Messungen der momentanen Ausrichtung des Schiffes bezüglich des Reterenzbezugspunktes zu berücksichtigen, um eine momentane Position der Maschine in einem Bezugspunkt zu ermitteln, der mit dem Rumpf (X0, Y0, 20) des Schiffes verbunden ist.
